Europäisches Patentamt

(19) European Patent Office

Office européen des brevets

(11) Publication number: **0 087 518**

**A2**

(12) # EUROPEAN PATENT APPLICATION

(21) Application number: **82111856.9**

(22) Date of filing: **21.12.82**

(51) Int. Cl.³: **G 01 B 11/24**
**G 01 B 11/02**

(30) Priority: **26.02.82 US 352597**

(43) Date of publication of application:
**07.09.83 Bulletin 83/36**

(84) Designated Contracting States:
**AT BE CH DE FR GB IT LI LU NL SE**

(71) Applicant: **Automatix Incorporated**
**1000 Tech Park Drive**
**Billerica Massachusetts 01821(US)**

(72) Inventor: **Libby, Charles J., Jr.**
**25 Grayfield Ave.**
**West Roxbury Massachusetts 02132(US)**

(74) Representative: **Strasse, Joachim**
**Strasse & Stoffregen, Patentanwälte**
**Zweibrückenstrasse 15**
**D-8000 München 2(DE)**

(54) **Method and apparatus for image acquisition.**

(57) A method and apparatus for image acquisition utilizing a non-planar beam of electro-magnetic radiation, such as, a hollow conical beam (16) of light, to illuminate at least a portion (18) of an object (62). The illuminated portion (18) of the object (62) is imaged on an array (44) of photosensitive elements to produce corresponding signals that are representative of the image on the array. These signals can be used to obtain identification information concerning the object (62) and guidance information for a plural axis manipulator employed in conjunction with the object. In one application the image acquisition apparatus is used in a robot (58) to provide control signals for guiding the robot tool (60) along a path, such as, a welding seam.

*FIG. 6*

**0087518**

Automatix Incorporated          München, December 17, 1982
Billerica, Mass.                                14 183

Method and Apparatus
for Image Acquisition

The present invention relates to sensor systems in general and, more particularly, to a method and apparatus for image acquisition.

Recent developments in the robotics industry have highlighted the need for accurate vision systems not only for parts identification, but also for robot guidance. United States Patent No. 4,105,925, is an example of an optical object locator which determines the position and orientation of parts on a moving conveyor through the use of two planes of light that intersect at a single transverse line on the conveyor circuit. The two planes of light are located at an acute angle with respect to the conveyor. A linear diode array is aligned with the single line of light on the conveyor. When a part or other object on the conveyor moves through the line of light, it intercepts the light above the conveyor at positions spaced laterally from the line of light. The linear diode array senses only the line segments on the conveyor located beyond the object or part boundaries. Through the use of electronic sampling of the illumination on linear array, the object or part boundaries are determined and the part shape and orientation are thereby detected.

Automated arc-welding or seam welding is a recent and expanding addition to the manufacturing process, particularly in the automotive industry. Although the quality and consistency of the finished weld is high, difficulties inherent in the process have to be addressed in the design of a robotic system. Arc-welding is often one of the last in a series of manufacturing steps, each of which may contribute tolerance errors to piece parts. Furthermore, the welding process itself introduces thermal stresses and deformations in the weldment. Typically, the repeated presentation of parts to be welded is accomplished by fixturing or tooling which fixes in space the components to be joined. The accuracy of this positioning will influence the final tolerance of the weldment.

A skilled human welder will adapt his welding to accomodate the vagaries of weldment seam position and fit-up. However, there exists few effective mechanisms in automated welding to accomplish these ends. It is estimated that at least thirty percent of the welding tasks otherwise appropriate for robot welding do not meet the minimum criteria for accuracy in dimensionality, part fit-up or fixture positioning.

In order to achieve the maximum benefits from robotic arc welding, the welding apparatus should be able to determine the geometry and location of the weld seam in the presence of the welding arc by mens of a suitable vision sensor. Given this information, adjustments then can be made to position accurately the welding torch and thus, accomodate inaccuracies in the weldment.

It is accordingly, a general object of the present invention to provide a method and apparatus for image acquisition.

It is a specific object of the invention to provide a method and apparatus for image acquisition which utilizes a non-planar beam of electro-magnetic radiation to illuminate an object which is thereafter imaged on a detector to produce corresponding signals representative of the image thereon.

It is another object of the invention to provide a method and apparatus for image acquisition in which the non-planar beam of electro-magnetic radiation takes the form of a hollow conical beam of light.

It is still another specific object of the invention to provide a method and apparatus for image acquisition in the presence of high ambient noise at the object whose image is thereafter acquired.

It is a further object of the invention that the image acquisition apparatus can be used in conjunction with a plural axis manipulator to provide guidance and identification information.

In a preferred embodiment of the invention, the method comprises the steps of generating a non-planar beam of light illuminating at least a portion of an object, imaging at least part of the illuminated portion of the object on an array of photosensitive elements to produce corresponding signals representative of the image, and controlling the extent of the illuminated portion of the object as a function of the ambient light noise at the object.

The light beam is preferably conical having an angular arc of selected angular width. The conical light beam can be produced by impinging a beam of collimated light, e.g. from a laser, on a reflective cylinder or mirror. The angular arc of the conical light beam will be a function of the cylinder radius and the width of the impinging light beam. Control of the extent of the illuminated portion of the object can be achieved by controlling the angular width of the arc of the conical light beam.

- 4 -

0087518

In another preferred embodiment of the invention the collimated light beam is swept transversely across the reflective cylinder, with the angular arc length being related to the beam sweep width. The reflective surface of a scanning galvanometer which directs the beam onto the reflective cylinder is well suited for that purpose. Sweep width can exactly be controlled by varying the amplitude of an AC current applied to the scanning galvanometer. With a further DC bias applied to the scanning galvanometer the angular arc of the conical beam can also be steered.

The image aquisition method and apparatus can be used in a multitude of applications. In another preferred embodiment of the invention it is incorporated into a robotic system for tooling workpieces, helping to overcome the prior art limitations outlined above.

Alternatively the conical light beam can be generated, in another preferred embodiment of the invention, by directing light onto the surface of a rotating mirror and controlling the angular arc length by varying the 'on' and 'off' time of the light source. The angular position of the rotating mirror is preferably determined by a suitable encoder.

It is a feature of the invention that the method thereof can be practiced with relatively conventional electro-optical components. Thus, the invention presents considerable advantage also in terms of cost-effectiveness.

The above objects and features of the invention will best be understood from a detailed description of a preferred embodiment thereof, selected for purposes of illustration, and shown in the accompanying drawings in which:

Figure 1 is a diagrammatic view in side elevation showing the generation of the non-planar beam of the present invention;

Figure 2 is another diagrammatic view in plan showing the intercept of the non-planar, conical beam on a plane;

Figure 3 is another diagrammatic view in plan showing the effect of sweeping a beam of light across a reflective cylinder to generate an angular arc beam intercept;

Figure 4 is a view in perspective showing the intercept generated by the nonplanar, conical beam on three parallel intercept planes that are spaced at different distances from the source of the conical beam;

Figure 5 is a view of the image plane of Figure 4 showing the beam intercepts at the intercept planes;

Figure 6 is a view in perspective and partial block form showing the image acquisition apparatus used in conjunction with a robot;

Figure 7 is a view in partial perspective and block form showing the optical system of Figure 6 with the robot, tool and workpiece omitted for purposes of clarity;

Figure 8 is a diagrammatic view in partial block form illustrating the generation of the intercepts of Figure 4;

Figure 9 is a view in perspective and partial block form showing an alternative method and apparatus for generation of the hollow conical beam; and,

Figure 10 is a diagram of the geometry of the system shown in Figure 9.

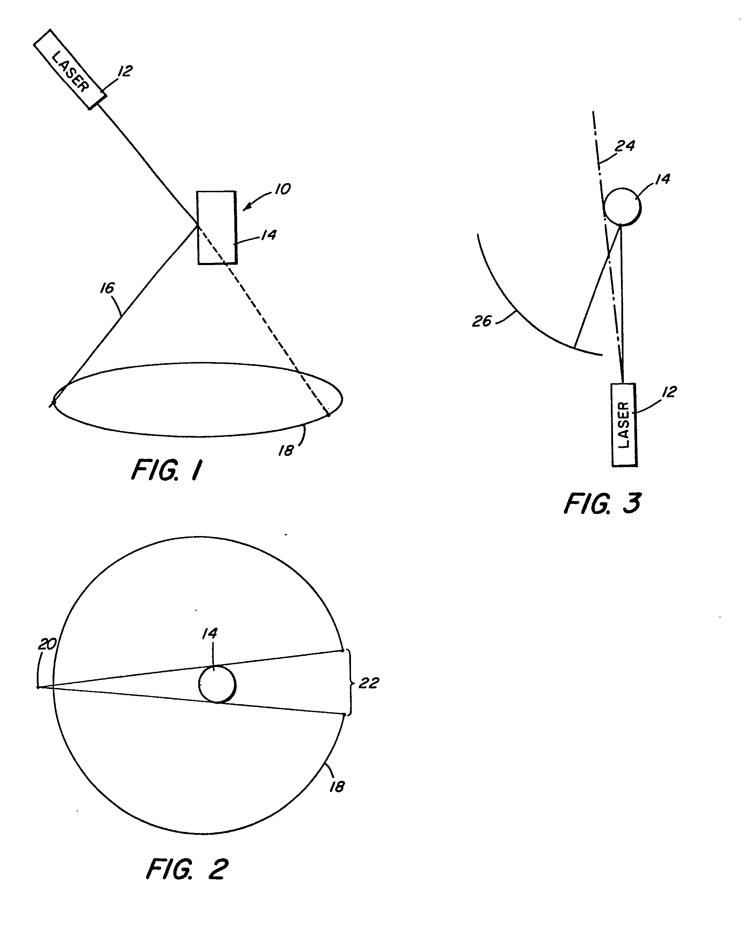

Turning now to the drawings, the basic concept of the method of the present invention can best be understood by referring to Figures 1 through 5 and 8 of the drawings.

Looking at Figure 1, the non-planar beam generation apparatus indicated generally by the reference numeral 10 comprises a light source such as, laser 12, and a reflective cylinder 14. The light from laser 12 impinges on cylinder 14 to produce a structural light pattern or beam 16 of light having a shaped surface approximating a conic surface. The intercept of the beam 16 on a plane is shown by intercept 18.

If the laser 12 and reflective cylindrical mirror 14 are fixed with respect to each other, the arcuate length of the intercept 18 is governed by the beam width of light from laser 12 impinging upon the reflective cylinder 14. It can be seen in Figure 2 that light from a source 20, such as the previously mentioned laser 12, is occluded by the reflective cylinder 14 to produce a gap 22 in the intercept 18.

The angular arc length of intercept 18 is not only a function of the beam width of the beam impinging upon the cylindrical mirror 14, but also upon the location of that beam on the cylindrical mirror. This is illustrated in Figure 3 by means of the solid line beam trace from laser 12 to mirror 14 and by the location of the same beam in a scanned position shown by the dashed line 24. Scanning of the laser beam from the solid position to the dashed position shown by line 24 produces an intercept arc 26. Thus, by scanning the laser beam across the surface of mirror 14, one can create a hollow conical beam having an angular arc of selected length. The term "conical beam" as used herein means a beam having the general shape of the surface of a cone i.e., a hollow cone. This beam configuration can be compared to the structural shape of the cone portion of an ice cream cone. Although the term "conical beam" will be used hereafter, it should be understood that the generalized description for the beam configuration is "non-planar" and that the "conical beam" is only one of a number of subsets of non-planar beam configurations.

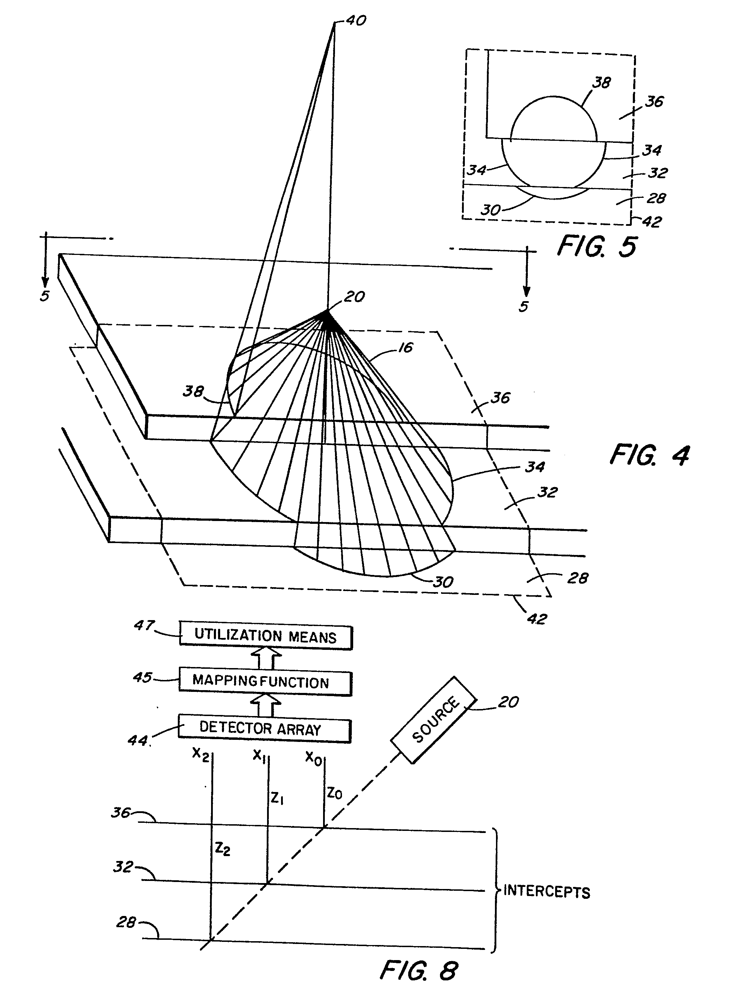

The previous description of the basic concept of the invention was directed to the intercept of the conical beam with a single plane. In order to fully appreciate the information that can be derived from plural intercepts, it will be helpful to examine Figures 4, 5 and 8. Figure 4 illustrates the intercepts produced by conical beam 16 from source 20 as it intercepts three intercept planes. The intercept plane 28 located furthest from source 20 produces an intercept 30. In a similar manner, an intermediate distance intercept plane 32 produces an intercept 34 while the closest intercept plane 36 produces an intercept 38. When these intercepts are viewed from an image objective 40, their images on an image plane 42 are located as shown in Figure 5.

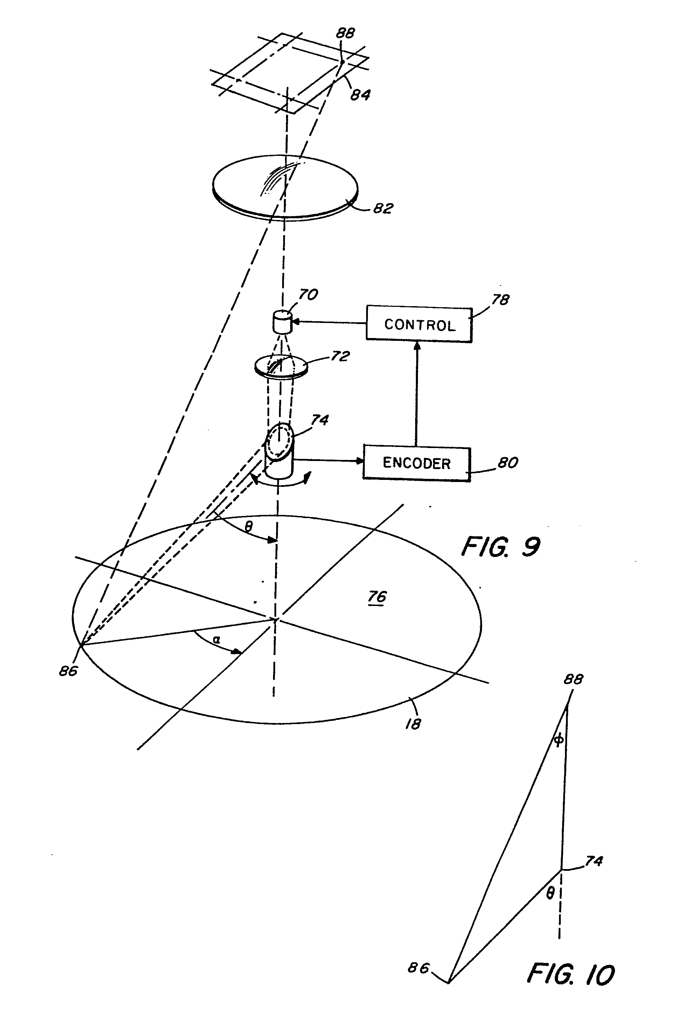

The geometric relationships of the intercept planes 28, 32 and 36 are also shown in Figure 8 wherein the intercept points $X_0$, $X_1$ and $X_2$ are imaged onto a photosensitive detector array 44 that produces corresponding

- 8 -

0087518

signals representative of the image or images thereon. The intercepts of the structured light of the conical beam thus provide a unique profile of the terrain geometry of the portion of an object illuminated by the beam. With this information, a variety of functions can be performed with the detector array output signals, including a mapping function 45 for inputting to a utilization means 47 to provide identification and guidance information with respect to the beam illuminated object.

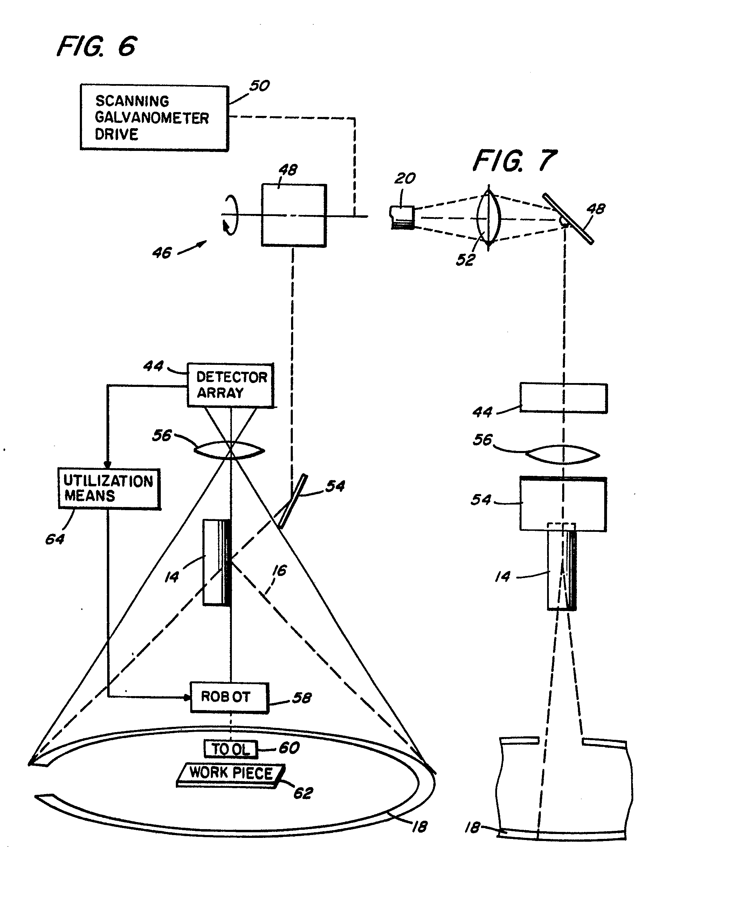

Referring now to Figures 6 and 7, the conical beam is formed by directing the light from source 20 to a scanning galvanometer indicated generally by the reference numeral 46. The mirror 48 of the scanning galvanometer is rotated by a scanning galvanometer drive 50. The light from source 20 passes through objective 52 onto the rotatable surface of mirror 48 where it is directed to mirror 54 and then to the reflective surface of the cylindrical mirror 14 to produce the previously mentioned conical beam 16. The beam intercept 18 is imaged onto the detector array 44 by an optical system indicated by the reference numeral 56. The image acquisition system shown in Figures 6 and 7 is used in conjunction with a robot 58 having a tool 60 for use with a workpiece 62. The robot 58, tool 60 and workpiece 62 are illustrated diagrammatically in block form in Figure 6. (These elements have been omitted from Figure 7 for purposes of clarity.)

The term "robot" is used herein in the U.S. robotic industry sense. However, it should be understood that the image axquisition method and apparatus of the invention can be used in conjunction with the more generalized apparatus known as a "plural axis manipulator". Thus, the invention is suitable for side beam welders (only two axis, X and Y, movement with Z axis adjustment) as well as "robots" as defined by the industry.

The signals from detector array 44 corresponding to the image of intercept 18, are applied to a suitable utilization means 64. The utilization means 64 can perform an identification function by comparing the intercept image information to a known pattern and/or provide appropriate control signals to robot 58 to control the positional relationship between the robot tool 60 and workpiece 62.

The robot tool 60 shown in Figure 6 has a selected positional relationship with respect to the conical beam 16. If the tool 60 is located generally co-axially with the axis of the conical beam 16, geometries can be simplified and the beam intercept 18 can be formed to substantially surround the robot tool 60 thereby providing a "look ahead" feature.

The angular arc length of beam intercept 18 can be controlled conveniently by varying the amplitude of the alternating current applied to the scanning galvanometer from drive 50. The intercept 18 can be "steered" by applying a direct current bias to the scanning galvanometer from drive 50.

Figure 9 illustrates an alternative method and apparatus for generating the conical light beam. Light from a source 70 is directed by optics 72 onto the surface of a rotating mirror 74 which in turns directs the light onto a plane surface 76. Full rotation of the mirror 74 produces a circular intercept 18. The angular arc length of the intercept 18 can be controlled by varying the time the light source 70 is "on" during a full rotation of rotatable mirror 74. The light source 70 can be on for the entire duration or less during a single rotation of the mirror 74. Control of the duration of the "on" cycle of light source 70 is provided by means of a control circuit 78. The angular position of the rotating mirror 74 is determined by an encoder 80 which can be used to provide angular position information for control circuit 78.

The conical beam intercept 18 is imaged by means of optics 82 onto a X, Y sensor 84. A suitable single spot only sensor is manufactured by United Detector Technology.

Figure 9 illustrates the imaging of the focused conical beam light spot 86 onto the single spot only XY sensor 84 at point 88. The geometric relationships of beam spot 86, image 88 and mirror 74 are shown in Figures 9 and 10. Since the angles $\phi$ and $\theta$ are known and the angle $\alpha$ is specified by the encoder 80, and since the distance between the image point 88 and mirror 74 is also known, the necessary information is available to analyze the terrain geometries of an object illuminated by the conical beam.

Having described in detail a preferred embodiment of my invention, it will now be obvious to those skilled in the art that numerous modifications can be made therein without departing from the scope of the invention as defined in the following claims.

0087518

Automatix Incorporated
1000 Tech Park Drive
Billerica, Mass. 01821 USA

Munich, Dec. 17, 1982
14 183

C l a i m s

1. Method for image acquisition comprising the steps of:

A. generating a non-planar beam (16) of electro-magnetic radiation;

B. illuminating at least a portion (18) of an object with said non-planar beam (16) of electro-magnetic radiation;

C. imaging at least part of said electro-magnetic radiation beam (16) illuminated portion (18) of the object on an array (44) of electro-magnetic radiation sensitive elements to produce corresponding signals representative of the image on said array; and,

D. controlling the extent of the illuminated portion (18) of the object as a function of the ambient electro-magnetic radiation at said object.

2. Method for image acquisition comprising the steps of:

A. generating a non-planar beam (16) of light;

B. illuminating at least a portion (18) of an object with said non-planar beam (16) of light;

C. imaging at least part of said light beam (16)

- 12 -

0087518

illuminated portion (18) of the object on an array (44) of photosensitive elements to produce corresponding signals representative of the image on said array; and,

D. controlling the extent of the illuminated portion (18) of the object as a function of the ambient light noise at said object.

3. Method for image acquisition comprising the steps of:

A. generating a conical beam (16) of light;

B. illuminating at least a portion (18) of an object with said conical beam (16) of light; and,

C. imaging at least part of said light beam (16) illuminated portion (18) of the object on an array (44) of photosensitive elements to produce corresponding signals representative of the image on said array.

4. The method of claim 3 wherein at least a portion of the imaging path is coaxial with the axis of the conical beam (16) extended from the apex thereof.

5. Method for image acquisition comprising the steps of:

A. generating a conical beam (16) of light having an angular arc of selected angular width;

B. illuminating at least a portion (18) of an object with said conical beam (16) of light;

C. imaging at least part of said light beam (16) illuminated portion (18) of the object on an array (44) of photosensitive elements to produce corresponding signals representative of the image on said array; and;

D. controlling the angular width of the arc of said conical light beam (16) as a function of the ambient light noise at said object.

6. Method for image acquisition comprising the steps of:

A. impinging a beam of collimated light on a reflective cylinder (14) to produce a conical beam (16) of light having an angular arc that is a function of the radius of the reflective cylinder (14) and the width of the collimated light beam impinging thereon;

B. illuminating at least a portion (18) of an object with said conical beam (16) of light; and,

C. imaging at least part of said light beam (16) illuminated portion of the object on an array (44) of photosensitive elements to produce corresponding signals representative of the image on said array.

7. The method of claim 6 wherein at least a portion of the imaging path is coaxial with the axis of the conical beam (16) extended from the apex thereof.

8. Method for image acquisition comprising the steps of:

A. impinging a beam of collimated light on a reflective cylinder (14) to produce a conical beam (16) of light having an angular arc that is a function of the radius of the reflective cylinder (14) and the width of the collimated light beam impinging thereon;

B. illuminating at least a portion (18) of an object with said conical beam (16) of light;

C. imaging at least part of said light beam (16) illuminated portion of the object on an array (44) of photosensitive elements to produce corresponding signals representative of the image on said array; and;

D. controlling the angular width of the arc of said conical light beam (16) as a function of the ambient light noise at said object.

9. Method of image acquisition comprising the steps of:

A. impinging a beam of collimated light on a reflective cylinder (14) to produce a conical beam (16) of light having an angular arc that is a function of the radius of the reflective cylinder (14) and the width of the collimated light beam impinging thereon;

B. illuminating at least a portion (18) of an object with said conical beam (16) of light;

C. imaging at least part of said light beam (16) illuminated portion (18) of the object on an array (44) of photosensitive elements to produce corresponding signals representative of the image on said array; and,

D. controlling the angular arc of said conical beam (16) of light by sweeping the collimated beam of light transversely across said reflective cylinder (14) with the angular arc length being related to the beam sweep width.

10. The method of claim 9 wherein said collimated beam is swept across said reflective cylinder (14) by impinging the collimated beam on the reflective surface (48) of a scanning galvanometer (46) which directs the beam onto said reflective cylinder.

11. The method of claim 9 further comprising the step of controlling the sweep width by varying the amplitude of an alternating current applied to the scanning galvanometer (46).

12. The method of claim 9 further comprising the step of steering the angular arc of said conical beam (16) by varying the direct current bias applied to said scanning galvanometer (46).

13. An apparatus for image acquisition comprising:
A. means for generating a non-planar beam (16) of electro-magnetic radiation that illuminates at least a portion (18) of an object;

B. an array means (44, 84) of electro-magnetic radiation sensitive elements, said elements producing signals representative of the electro-magnetic radiation impinging thereon;

C. means (56,82) for imaging at least part of said electro-magnetic radiation beam (16) illuminated portion (18) of the object on said array means (44, 84) of electro- magnetic radiation sensitive elements to produce corresponding signals representative of the image on said array;

D. means (50, 78) for controlling the extent of the illuminated portion (18) of the object as a function of the ambient electro-magnetic radiation at said object; and,

E. utilization means (47, 64) responsive to said signals.

14. An apparatus for image acquisition comprising:

A. means for generating a non-planar beam of light (16) that illuminates at least a portion (18) of an object;

B. an array means (44, 84) of photosensitive elements, said elements producing signals representative of the light impinging thereon;

C. means (56, 82) for imaging at least part of said light beam (16) illuminated portion (18) of the object on said array means (44, 84) of photosensitive elements to produce corresponding signals representative of the image on said array;

D. means (50, 78) for controlling the extent of the illuminated portion (18) of the object as a function of the ambient light noise at said object; and,

E. utilization means (47, 64) responsive to said signals.

15. An apparatus for image acquisition comprising:

A. means for generating a conical beam of light (16) that illuminates at least a portion (18) of an object;

B. an array means (44, 84) of photosensitive elements, said elements producing signals representative of the light impinging thereon;

C. means (56,82) for imaging at least part of said light beam (16) illuminated portion (18)of the object on said array means (44, 84) of photosensitive elements to produce corresponding signals representative of the image on said array; and,
D. utilization means (47, 64) responsive to said signals.

16. The apparatus of claim 15 wherein at least a portion of the imaging path is coaxial with the axis of the conical beam (16) extended from the apex thereof.

17. An apperatus for image acquisition comprising:

A. means for generating a conical beam (16)of light having an angular arc of selected angular width that illuminates at least a portion (18) of an object;

B. an array means (44, 84) of electro-magnetic radiation sensitive elements, said elements producing signals representative of the electro-magnetic radiation impinging thereon;

C. means (56, 82) for imaging at least part of said light beam (16) illuminated portion (18) of the object on an array (44, 84) of photosensitive elements to produce corresponding signals representative of the image on said array;

D. means (50, 78) for controlling the angular width of the arc of said conical light beam (16) as a function of the ambient light noise at said object; and

E. utilization means (47, 64) responsive to said signals.

18. An apparatus for image acquisition comprising:

A. a reflective cylinder means (14);

B. means (46) for impinging a beam of collimated light on said reflective cylinder means (14) to produce a conical beam (16) of light having an angular arc that (i) is a function of the radius of the reflective cylinder means (14) and the width of the collimated light beam impinging thereon and (ii) illuminates at least a portion (18) of an object;

C. an array means (44) of photosensitive elements, said elements producing signals representative of the light impinging thereon;

D. means (56) for imaging at least part of said light beam (16) illuminated portion (18) of the object on said array means (44) of photosensitive elements to produce corresponding signals representative of the image on said array; and,

E. utilization means (64) responsive to said signals.

19. The apparatus of claim 18 wherein at least a portion of the imaging path is coaxial with the axis of the conical beam (16) extended from the apex thereof.

20. An apparatus for image acquisition comprising:

A. a reflective cylinder means (14);

B. means (46) for impinging a beam of collimated light on said reflective cylinder means (14) to produce a conical beam (16) of light having an angular arc that (i) is a function of the radius of the reflective cylinder (14) and the width of the collimated light beam impinging thereon and (ii) illuminates at least a portion (18) of an object;

C. an array means (44) of photosensitive elements, said elements producing signals representative of the light impinging thereon;

D. means (56) for imaging at least part of said light beam (16) illuminated portion (18) of the object on said array means (44) of photosensitive elements to produce corresponding signals representative of the image on said array;

E. means (50,48) for controlling the angular width of the arc of said conical light beam (16) as a function of the ambient light noise at said object; and,

F. utilization means (64) responsive to said signals.

21. An apparatus for image acquisition comprising:

A. a reflective cylinder means (14);

B. means (46) for impinging a beam of collimated light on said reflective cylinder means (14) to produce a conical beam (16) of light having an angular arc that (i) is a function of the radius of the reflective cylinder (14) and the width of the collimated light beam impinging thereon and (ii) illuminates at least a portion (18) of an object;

C. an array means (44) of photosensitive elements, said elements producing signals representative of the light impinging thereon;

D. means (56) for imaging at least part of said light beam (16) illuminated portion (18) of the object on said array means (44) of photosensitive elements to produce corresponding signals representative of the image on said array;

E. means (50, 48) for controlling the angular arc of said conical beam (16) of light by sweeping the collimated beam of light transversely across said reflective cylinder means (14) with the angular arc length being related to the beam sweep width; and,

F. utilization means (64) responsive to said signals.

22. The apparatus of claim 21 further comprising a scanning galvanometer (46) and wherein said collimated beam is swept across said reflective cylinder means (14) by impinging the collimated beam on the reflective surface (48) of the scanning galvanometer (46) which directs the beam onto said reflective cylinder means (14).

23. The apparatus of claim 21 further comprising means for varying the amplitude of an alternating current applied to the scanning galvanometer thereby controlling the sweep width of said collimated light beam.

24. The apparatus of claim 21 further comprising means (50) for varying the direct current bias applied to said scanning galvanometer (46) thereby steering the angular arc of said conical beam (16).

25. An apparatus for image acquisition comprising:

A. a rotatable mirror means (74);

B. means (70, 72) for impinging a beam of collimated light on said rotatable mirror means (74) to produce a conical beam (16) of light having an angular arc of predetermined angular width that illuminates at least a portion (18) of an object;

C. an array means (84) of photosensitive elements, said elements producing signals representative of the light impinging thereon;

D. means (82) for imaging at least part of said light beam (16) illuminated portion (18) of the object on said array means (84) of photosensitive elements to produce corresponding signals representative of the image on said array; and,

- 22 -

0087518

E. utilization means (47) responsive to said signals.

26. An apparatus for image acquisition comprising:

A. a rotatable mirror means (74);

B. means (70, 72) for impinging a beam of collimated light on said rotatable mirror means (74) to produce a conical beam (16) of light having an angular arc of predetermined angular width that illuminates at least a portion (18) of an object;

C. an array means (84) of photosensitive elements, said elements producing signals representative of the light impinging thereon;

D. means (82) for imaging at least part of said light beam (16) illuminated portion (18) of the object on said array means (84) of photosensitive elements to produce corresponding signals representative of the image on said array;

E. means (78) for controlling the angular width of the arc of said conical light beam (16) as a function of the ambient light noise at said object; and,

F. utilization means (47) responsive to said signals.

27. In a plural axis manipulator for use with a workpiece, an image acquisition apparatus comprising:

A. means (14, 74) for generating a non-planar beam (16) of electro-magnetic radiation that illuminates at least a portion (18) of the workpiece (62), said non-planar beam of electro-magnetic radiation having a selected positional relationship with respect to the plural axis manipulator;

B. an array means (44,84) of electro-magnetic radiation sensitive elements, said elements producing signals representative of the electro-magnetic radiation impinging thereon;

C. means (56, 82) for imaging at least part of said electro-magnetic radiation beam (16) illuminated portion (18) of the workpiece (62) on said array (44, 84) of electro-magnetic radiation sensitive elements to produce corresponding signals representative of the image on said array;

D. means (46, 78) for controlling the extent of the illuminated portion (18) of the workpiece (62) as a function of the ambient electro-magnetic radiation at said workpiece (62); and,

E. utilization means (47, 64) responsive to said signals.

28. In a plural axis manipulator for use with a workpiece, an image acquisition apparatus comprising:

A. means (14, 74) for generating a non-planar beam (16) of light that illuminates at least a portion (18) of the workpiece (62), said non-planar beam (16) of light having a selected positional relationship with respect to the plural axis manipulator;

B. an array means (44, 84) of photosensitive elements, said elements producing signals representative of the light impinging thereon;

C. means (56, 82) for imaging at least part of said light beam (16) illuminated portion (18) of the workpiece (62) on said array means (44, 84) of photosensitive elements to produce corresponding signals representative of the image on said array;

D. controlling the extent of the illuminated portion (18) of the workpiece (62) as a function of the ambient light noise at said workpiece; and,

E. utilization means (47, 64) responsive to said signals.

29. In a plural axis manipulator for use with a workpiece, an image acquisition apparatus comprising:

A. means (14, 74) for generating a conical beam (16) of light that illuminates at least a portion (18) of the workpiece (62), said conical beam (16) of light having a selected positional relationship with respect to the plural axis manipulator;

B. an array means (44, 84) of photosensitive elements, said elements producing signals representative of the light impinging thereon;

C. means (56, 82) for imaging at least part of said light beam (16) illuminated portion (18) of the workpiece (62) on said array means (44, 84) of photosensitive elements to produce corresponding signals representative of the image on said array; and,

D. utilization means (47, 64) responsive to said signals.

30. In a plural axis manipulator for use with a workpiece, an image acquisition apparatus comprising:

A. means (14, 74) for generating a conical beam (16) of light having an angular arc of selected angular width that illuminates at least a portion (18) of the workpiece (62), said conical beam (16) of light having a selected positional relationship with respect to the plural axis manipulator;

B. an array means (44, 84) of photosensitive elements, said elements producing signals representative of the light impinging thereon;

C. means (56, 82) for imaging at least part of said light beam (16) illuminated portion (18) of the workpiece (62) on said array means (44, 84) of photosensitive elements to produce corresponding signals representative of the image on said array;

D. controlling the angular width of the arc of said conical light beam (16) as a function of the ambient light noise at said workpiece (62); and,

E. utilization means (47, 64) responsive to said signals.

31. In a robot having a tool for use with a workpiece, an image acquisition apparatus comprising:

A. means (14, 74) for generating a non-planar beam (16) of electro-magnetic radiation that illuminates at least a portion (18) of the workpiece (62), said non-planar beam (16) of electro-magnetic radiation having a selected positional relationship with respect to the tool (60) of the robot (58);

B. an array means (44, 84) of electro-magnetic radiation sensitive elements, said elements producing signals representative of the electro-magnetic radiation impinging thereon;

C. means (56, 82) for imaging at least part of said electro-magnetic radiation beam (16) illuminated portion (18) of the workpiece (62) on said array means (44, 84) of electro-magnetic radiation sensitive elements to produce corresponding signals representative of the image on said array;

D. means (46, 78) for controlling the extent of the illuminated portion (18) of the workpiece (62) as a function of the ambient electro-magnetic radiation at said workpiece (62); and,

E. utilization means (47, 64) responsive to said signals.

32. In a robot having a tool for use with a workpiece, an image acquisiton apparatus comprising:

A. means (14, 74) for generating a non-planar beam (16) of light that illuminates at least a portion (18) of the workpiece (62), said non-planar beam (16) of light having a selected positional relationship with respect to the tool (60) of the robot (58);

B. an array means (44, 84) of photosensitive elements, said elements producing signals representative of the light impinging thereon;

C. means (56, 82) for imaging at least part of said light beam (16) illuminated portion (18) of the workpiece (62) on said array means (44, 84) of photosensitive elements to produce corresponding signals representative of the image on said array;

D. controlling the extent of the illuminated portion (18) of the workpiece (62) as a function of the ambient light noise at said workpiece (62); and,

E. utilization means (47, 64) responsive to said signals.

33. In a robot having a tool for use with a workpiece, an image acquisition apparatus comprising:

A. means (14, 74) for generating a non-planar beam (16) of light that illuminates at least a portion (18) of the workpiece (62), said non-planar beam (16) of light having a selected positional relationship with respect to the tool (60) of the robot (58);

B. an array means (44, 84) of photosensitive elements, said elements producing signals representative of the light impinging thereon;

C. means (56, 82) for imaging at least part of said light beam illuminated portion of the workpiece on said array means (44, 84) of photosensitive elements to produce corresponding signals representative of the image on said array;

D. controlling the extent of the illuminated portion (18) of the workpiece (62) as a function of the ambient light noise at said workpiece (62); and,

E. utilization means (47, 64) responsive to said signals for controlling the position of the tool (60) with respect to the workpiece (62)..

34. In a robot having a tool for use with a workpiece, an image acquisition apparatus comprising:

A. means (14, 74) for generating a conical beam (16) of light that illuminates at least a portion (18) of the workpiece (62), said conical beam (16) of light having a selected positional relationship with respect to the tool (60) of the robot (58);

B. an array means (44, 84) of photosensitive elements, said elements producing signals representative of the light impinging thereon;

C. means (56, 82) for imaging at least part of said light beam (16) illuminated portion (18) of the workpiece (62) on said array means (44, 84) of photosensitive elements to produce corresponding signals representative of the image on said array; and,

D. utilization means (47, 64) responsive to said signals.

35. In a robot having a tool for use with a workpiece, an image acquisition apparatus comprising:

A. means (14, 74) for generating a conical beam (16) of light that illuminates at least a portion (18) of the workpiece (62), said conical beam (16) of light having a selected positional relationship with respect to the tool (60)of the robot (58);

B. an array means (44, 84) of photosensitive elements, said elements producing signals representative of the light impinging thereon;

C. means (56, 82) for imaging at least part of said light beam (16) illuminated portion (18)of the workpiece (62) on said array means (44, 84) of photosensitive elements to produce corresponding signals representative of the image on said array; and,

D. utilization means (47, 64) responsive to said signals for controlling the position of the tool (60) with respect to the workpiece (62).

36. The apparatus of claim 35 wherein at least a portion of the imaging path is coaxial with the axis of the conical beam (16) extended from the apex thereof.

37. In a robot having a tool for use with a workpiece, an image acquisition apparatus comprising:

A. means (14, 74) for generating a conical beam (16) of light having an angular arc of selected angular width that illuminates at least a portion (18) of the workpiece (62), said conical beam (16) of light having a selected positional relationship with respect to the tool (60) of the robot (58);

B. an array means (44, 84) of photosensitive elements, said elements producing signals representative of the light impinging thereon;

C. means (56, 82) for imaging at least part of said light beam (16) illuminated portion (18) of the workpiece (62) on said array means (44, 84) of photosensitive elements to produce corresponding signals representative of the image on said array;

D. controlling the angular width of the arc of said conical light beam (16) as a function of the ambient light noise at said workpiece; and,

E. utilization means (47, 64) responsive to said signals.

38. In a robot having a tool for use with a workpiece, an image acquisition apparatus comprising:

A. means (14, 74) for generating a conical beam (16) of light having an angular arc of selected angular width that illuminates at least a portion (18) of the workpiece (62), said conical beam (16) of light having a selected positional relationship with respect to the tool (60) of the robot (58);

B. an array means (44, 84) of photosensitive elements, said elements producing signals representative of the light impinging thereon;

C. means (56, 82) for imaging at least part of said light beam (16) illuminated portion (18) of the workpiece (62) on said array means (44, 84, of photosensitive elements to produce corresponding signals representative of the image on said array;

D. controlling the angular width of the arc of said conical light beam (16) as a function of the ambient light noise at said workpiece (62); and,

E. utilization means (47, 64) responsive to said signals for controlling the position of the tool (60) with respect to the workpiece (62).

39. In a robot having a tool for use with a workpiece, an image acquisition apparatus comprising:

A. a reflective cylinder means (14) having a longitudinal axis, said longitudinal axis having a selected positional relationship with respect to the tool (60) of the robot (58);

B. means (46, 54) for impinging a beam of collimated light on said reflective cylinder means (14) to produce a conical beam (16) of light having an angular arc that (i) is a function of the radius of the reflective cylinder means (14) and the width of the collimated light beam impinging thereon and (ii) illuminates at least a portion of the workpiece (62);

C. an array means (44) of photosensitive elements, said elements producing signals representative of the light impinging thereon;

D. means (56) for imaging at least part of said light beam (16) illuminated portion (18) of the workpiece (62) on said array means (44) of photosensitive elements to produce corresponding signals representative of the image on said array; and,

E. utilization means (64) responsive to said signals for controlling the position of the tool (60) with respect to the workpiece (62).

40. The apparatus of claim 39 wherein at least a portion of the imaging path is coaxial with the axis of the conical beam (16) extended from the apex thereof.

41. In a robot having a tool for use with a workpiece an image acquisition apparatus comprising:

   A. a reflective cylinder means (14) having a longitudinal axis, said longitudinal axis having a selected positional relationship with respect to the tool (60) of the robot (58);

   B. means (46, 54) for impinging a beam of collimated light on said reflective cylinder means (14) to produce a conical beam (16) of light having an angular arc that (i) is a function of the radius of the reflective cylinder means (14) and the width of the collimated light beam impinging thereon and (ii) illuminates at least a portion of the workpiece (62);

   C. an array means (44) of photosensitive elements, said elements producing signals representative of the light impinging thereon;

   D. means (56) for imaging at least part of said light beam (16) illuminated portion (18) of the workpiece (62) on said array means (44) of photosensitive elements to produce corresponding signals representative of the image on said array;

E. controlling the angular width of the arc of said conical light beam (16) as a function of the ambient light noise at said workpiece (62); and,

F. utilization means (64) responsive to said signals for controlling the position of the tool (60) with respect to the workpiece (62).

42. An apparatus for image acquisition comprising:

A. a reflective cylinder means (14);

B. means (46, 54) for impinging a beam of collimated light on said reflective cylinder means (14) to produce a conical beam of light (16) having an angular arc that (i) is a function of the radius of the reflective cylinder (14) and the width of the collimated light beam impinging thereon and (ii) illuminates at least a portion (18) of an object;

C. an array means (44) of photosensitive elements, said elements producing signals representative of the light impinging thereon;

D. means (56) for imaging at least part of said light beam (16) illuminated portion (18) of the object on said array means (44) of photosensitive elements to produce corresponding signals representative of the image on said array;

E. controlling the angular width of the arc of said conical light beam (16) as a function of the ambient light noise at said object; and,

F. utilization means (64) responsive to said signals.

43. An apparatus for image acquisition comprising:

A. a reflective cylinder means (14);

B. means (46, 54) for impinging a beam of collimated light on said reflective cylinder means (14) to produce a conical beam (16) of light having an angular arc that (i) is a function of the radius of the reflective cylinder (14) and the width of the collimated light beam impinging thereon and (ii) illuminates at least a portion (18) of an object;

C. an array means (44) of photosensitive elements, said elements producing signals representative of the light impinging thereon;

D. means (56) for imaging at least part of said light beam (16) illuminated portion (18) of the object on said array means (44) of photosensitive elements to produce corresponding signals representative of the image on said array;

E. means (50, 48) for controlling the angular arc of said conical beam (16) of light by sweeping the collimated beam of light transversely across said reflective cylinder means (14) with the angular arc length being related to the beam sweep width; and,

F. utilization means (64) responsive to said signals.

44. The apparatus of claim 43 further comprising a scanning galvanometer (46) and wherein said collimated beam is swept across said reflective cylinder means (14) by impinging the collimated beam on the reflective surface (48) of the scanning galvanometer (46) which directs the beam onto said reflective cylinder means (14).

45. The apparatus of claim 43 further comprising means (50) for varying the amplitude of an alternating current applied to the scanning galvanometer (46) thereby controlling the sweep width of said collimated light beam.

46. The apparatus of claim 43 further comprising means (50) for varying the direct current bias applied to said scanning galvanometer (46) thereby steering the angular arc of said conical beam.

FIG. 1

FIG. 2

FIG. 3

FIG. 5

FIG. 4

UTILIZATION MEANS 47

MAPPING FUNCTION 45

DETECTOR ARRAY 44

SOURCE 20

INTERCEPTS

FIG. 8

**FIG. 6**

**FIG. 7**

0087518

CONTROL

ENCODER

*FIG. 9*

*FIG. 10*